# EUROPÄISCHE PATENTSCHRIFT

(11) **EP 4 276 423 B1**
(45) Veröffentlichungstag und Bekanntmachung des Hinweises auf die Patenterteilung: **09.10.2024**
(21) Anmeldenummer: 23171543.4
(22) Anmeldetag: 04.05.2023
(51) Int. Cl.: G01G 19/03, G01G 19/52, G01N 23/04

(54) **INSPEKTIONSVORRICHTUNG MIT DARIN INTEGRIERTER RÖNTGEN- UND WÄGEVORRICHTUNG**
INSPECTION DEVICE WITH X-RAY AND WEIGHING DEVICE INTEGRATED THEREIN
DISPOSITIF D'INSPECTION AVEC UN DISPOSITIF DE PESAGE ET DE RADIOGRAPHIE INTÉGRÉ

(30) Priorität: 09.05.2022 DE 102022111511
(43) Veröffentlichungstag der Anmeldung: 15.11.2023
(73) Patentinhaber: WIPOTEC GmbH, 67657 Kaiserslautern (DE)
(72) Erfinder: Düppre, Theo, 67663 Kaiserslautern (DE)
(74) Vertreter: Eder Schieschke & Partner mbB

(56) Entgegenhaltungen:
- DE-A1- 102007 032 270
- JP-A- 2011 202 979
- JP-A- H0 949 883

## Beschreibung

Die Erfindung betrifft eine Inspektionsvorrichtung, die in einem vorzugsweise vorhanglosen Strahlenschutzgehäuse eine Vorrichtung zur Inspektion mittels elektromagnetischer Strahlung, insbesondere eine Röntgenvorrichtung, und eine Wägevorrichtung beinhaltet.

Derartige Inspektionsvorrichtungen finden beispielsweise in der Lebensmittelindustrie wie auch in der Pharmaindustrie Anwendung, wobei auch unverpackte Produkte auf deren einwandfreie Qualität und Gewicht geprüft werden.

Eine derartige Inspektion von Produkten erfolgt üblicherweise in einer Produktionslinie, wobei insbesondere für die Röntgeninspektion besondere Schutzmaßnahmen vorgesehen werden müssen.

Gerade bei leichtgewichtigen Produkten sowie aus umweltschutztechnischen Gründen ist das Vorsehen von schweren Strahlenschutzvorhängen aus Materialen wie Blei oder Ähnlichem problematisch. So besteht - abgesehen von der unerwünschten Verwendung bestimmter Materialien - auch die Gefahr, dass die auf einem Band geförderten Produkte in ihrer Lage verändert werden und deren Prüfung zu fehlerhaften Ergebnissen führt.

Zudem kann eine unerwünschte Lageveränderung auch bei der Weiterverarbeitung der Produkte, wie beispielsweise bei der Aufbringung von Kennzeichnungen, zu Problemen führen.

Stand der Technik in diesem technischen Gebiet ist beispielsweise die JP 2011 202979 A.

Der vorliegenden Erfindung liegt daher die Aufgabe zugrunde, eine Inspektionsvorrichtung zu schaffen, die vorgenannte Probleme vermeidet und sowohl eine Inspektion mittels elektromagnetischer Strahlung, insbesondere Röntgeninspektion, als auch ein Wiegen von Produkten (verpackt, unverpackt oder in noch offenen Behältnissen verpackt) ermöglicht, wobei die Inspektionsergebnisse eine hohe Genauigkeit besitzen und Fehlergebnisse vermieden werden. Weiterhin ist eine kurze Bauform in Förderrichtung angestrebt.

Diese Aufgabe wird erfindungsgemäß mit einer Inspektionsvorrichtung mit den Merkmalen des Anspruchs 1 gelöst.

Da die Inspektionsvorrichtung sowohl eine Vorrichtung zur Inspektion mittels elektromagnetischer Strahlung, insbesondere Röntgenvorrichtung, als auch eine Wägevorrichtung beinhaltet, wird vorteilhafterweise eine kurze Bauform in x-Richtung (Förderrichtung) ermöglicht.

Bereits das Vorlagern einer Vorrichtung zur Inspektion mittels elektromagnetischer Strahlung (in Förderrichtung), insbesondere Röntgenvorrichtung, vor einer Wägevorrichtung, dient als Beruhigungsstrecke für den Lauf des Bandes und gegebenenfalls des Produktes, so dass im Bereich der Wägevorrichtung das Band ruhiger läuft und das Risiko eines Gurtflatterns verringert und eine kürzere Bauform (bzw. kürzere Baulänge) der gesamten Vorrichtung ermöglicht wird.

Um Wägeergebnisse von hoher Genauigkeit bei dennoch ausreichendem Strahlenschutz zu ermöglichen, weist die Inspektionsvorrichtung ausgangsseitig einen schrägen Bereich und eine Wägevorrichtung auf, die in x-Richtung gesehen unmittelbar vor dem schrägen Bereich angeordnet ist. Der schräge Bereich ist bevorzugt als Platte, insbesondere als abgekantetes Blech, ausgeführt. Selbstverständlich ist es auch denkbar, den schrägen Bereich durch wenigstens eine Umlenkrolle auszubilden.

Da das Band erfindungsgemäß, in partieller Betrachtung, über den schrägen Bereich (unter Berücksichtigung der Bandelastizität) nach unten gezogen wird und auf diesem geführt wird, weist das Band im Bereich unmittelbar vor dem schrägen Bereich - und damit dem Bereich der Wägevorrichtung - einen gleichförmigen Bandlauf ohne Bewegung (Abheben) in z-Richtung (Höhenrichtung) auf.

Durch die (wenn auch geringfügig) höhere Bandspannung im Vergleich zu stromaufwärts gelegenen Bandbereichen kann ein unerwünschtes Gurtflattern oder eine Wulstbildung (vor der Umlenkstelle bzw. Richtungsänderung des Bandes) vermieden werden. Dieses partielle Ziehen, wenigstens im Bereich der Wägevorrichtung, kann durch die Geometrie der Bandführung, durch entsprechende Anordnung einer Antriebsrolle, insbesondere Traktorrolle, näher zum Bereich der Wägevorrichtung und/oder durch entsprechende im Produktstrom (vor der Wägevorrichtung) vorgelagerte Rollen und/oder vorgelagerte Bandführungen mit Bremswirkung (Hemmung) verstärkt werden. Vorzugsweise ist in Bandlaufrichtung die Bandstrecke von Wägevorrichtung zur Antriebsrolle 21 (ausgangsseitig) kürzer als die Bandstrecke von Antriebsrolle zur Wägevorrichtung (Bandgeometrie) ausgebildet.

Dadurch, dass der Lauf des Bandes wie vorstehend erläutert derart ausgebildet ist, dass das Band nicht nur im Bereich der Wägevorrichtung, sondern vorzugsweise auch im Bereich der Vorrichtung zur Inspektion mittels elektromagnetischer Strahlung (in Förderrichtung), insbesondere Röntgenvorrichtung, gezogen wird, können vorteilhafterweise auch Wulstbildung, Dehnung etc. in Bandlaufrichtung in der Röntgenvorrichtung vermieden werden. Derartige Effekte könnten ansonsten die Synchronität und Qualität der aufgenommenen Bilder, insbesondere Zeilen pro Zeit und Längeneinheit, bei der Inspektion mittels elektromagnetischer Strahlung, insbesondere beim Röntgen, unerwünscht beeinflussen.

Das Band wird vorzugsweise mit einem definierten Verlauf der Geschwindigkeit, insbesondere einer konstanten Geschwindigkeit, angetrieben, um den Betrieb der Vorrichtung zur Inspektion mittels elektromagnetischer Strahlung (in Förderrichtung), insbesondere Röntgenvorrichtung mit einer kostengünstigen Zeilenkamera, die einen definierten Wert Zeile pro Zeiteinheit erfordert, zu ermöglichen.

Der schräge Bereich ist vorzugsweise derart in der Inspektionsvorrichtung angeordnet, dass sein Gewicht beim Wiegen eines zuvor geröntgten Produkts nicht berücksichtigt wird. Entsprechend besteht bei der Anordnung der Wägevorrichtung in unmittelbarer Nähe zu dem schrägen Bereich zwischen einem lastaufnehmenden Teil der Wägevorrichtung und dem schrägen Bereich keine (kraftschließende) Verbindung, so dass das Eigengewicht des schrägen Bereichs beim Wiegen unberücksichtigt bleibt.

Zudem kann durch das Führen des Bandes über den schrägen Bereich vermieden werden, dass das Wiegen eines Produkts vor diesem schrägen Bereich von etwaigen vertikalen Kraftkomponenten der Bandführung beeinflusst wird.

Nach der Erfindung wird - zur Vermeidung von Bandübergängen und damit einhergehenden erhöhten Reinigungsaufwand - die Vorrichtung zur Inspektion mittels elektromagnetischer Strahlung (in Förderrichtung), insbesondere Röntgenvorrichtung, die Wägevorrichtung und wenigstens ein Teilbereich des schrägen Bereichs von einem gemeinsamen Endlosförderband umlaufen.

Durch den schrägen Bereich wird, selbst ohne zusätzlichen Strahlenschutzvorhang, das Austreten von Röntgenstrahlung (oder einer anderen gefährlichen Strahlung wie beispielsweise Terahertzstrahlung) aus dem Strahlenschutzgehäuse vermieden. Hierdurch entfallen die sonst erforderlichen Strahlenschutzvorhänge und damit deren Probleme wie deren Verschmutzung und deren Verschleiß. Entsprechend kann auch auf eine Reinigung und Abriebüberwachung der Strahlenschutzvorhänge, insbesondere Bleivorhänge, verzichtet werden.

Selbst das Austreten von Strahlung aufgrund von Reflexionen aus dem Strahlenschutzgehäuse wird durch den im Vergleich zur Bandebene der Röntgeninspektion tieferliegenden Ausgangsbereich bzw. Ausgangsöffnung in ausreichender Weise abgehalten.

Hierbei ist anzumerken, dass sich die Röntgenvorrichtung (mit Röntgenquelle) durch deren (in Förderrichtung) vorgelagerte Position vor der Wägevorrichtung nicht in unmittelbarer Nähe zum Ausgangsbereich befindet.

Aber auch bei anderen Inspektionen mittels elektromagnetischer Strahlung, beispielsweise mittels optischer Kamera (auch mit sichtbarem Licht, Infrarot, UV, etc.), wird oft ein Strahlenschutzgehäuse benötigt, beispielsweise um ein Eindringen von Fremdlicht oder Fremdstrahlung zu verhindern. Hierbei kann statt, wie vorstehend beschrieben, einem Austreten einer Strahlung in ähnlicher Weise das Eintreten einer Strahlung zu einem entsprechenden Detektor verhindert werden.

Gerade für einen Hell-Dunkel-Abgleich einer Kamera ist es von besonderem Vorteil, unerwünschtes Fremdlicht (gegen ein Eindringen) mittels eines Strahlenschutzgehäuses abzuschirmen.

Nach der Erfindung überwindet das Obertrum des Endlosbandes auf seinem Weg vom Bereich zum Wiegen zum Ausgangsbereich einen Höhenunterschied entgegen der z-Richtung mittels eines schrägen Bereichs. Auf diese Weise kann das Niveau des Ausgangsbereichs auf unterschiedliche Gegebenheiten angepasst werden.

In bevorzugter Ausgestaltung der Erfindung ist die Wägevorrichtung als Modul ausgebildet, um in die Inspektionsvorrichtung eingesetzt und aus dieser entnommen werden zu können. Dabei ist wenigstens ein Teilbereich als Abschnitt des schrägen Bereichs als integraler Bestandteil ortsfest an der modular ausgebildeten Wägevorrichtung angeordnet. In bevorzugter Form ist dieser Teil als Platte, insbesondere als abgekantetes Blech, ausgeführt. Selbstverständlich ist es auch denkbar, diesen Teil des schrägen Bereichs beispielsweise durch eine, zwei oder mehrere Umlenkrollen auszubilden.

Durch die modulare, integrierte Ausbildung ist es möglich, den Abschnitt zu der Wägevorrichtung bereits werksseitig fertig justiert herzustellen, so dass eine sonst erforderliche Justage beim Einsetzen des Moduls entfallen kann.

So kann gewährleistet werden, dass der in z-Richtung liegende höchste Punkt des Abschnitts fluchtend zum höchsten Punkt der Wägeeinrichtung bzw. deren Wägeplattform oder leicht darüber liegt, so dass keine vertikale Kraftkomponente der Bandführung das Wiegen eines Produkts unmittelbar beeinflusst.

Zudem wird durch den modularen Aufbau die Wartung, Reinigung, Reparatur etc. der Vorrichtung erleichtert, da diese bis auf ein Entspannen oder Abnehmen des Bandes ohne Zerlegen einer fertig montierten Anlage erfolgen können.

In weiterer Ausgestaltung der Erfindung ist der Abschnitt des schrägen Bereichs derart an der Wägevorrichtung angeordnet, dass sein Gewicht beim Wiegen eines zuvor geröntgten Produkts nicht berücksichtigt wird. Beispielsweise kann der schräge Bereich an dem (ortsfesten) festlandseitigen Bereich der Wägevorrichtung oder der Wägezelle selbst angeordnet sein, so dass ein lastaufnehmender Bereich der Wägevorrichtung hiervon unbeeinflusst bleibt.

Auch der Antrieb für den Gurt kann am Festland montiert sein, so dass der Antrieb beim Wiegen nicht als Vorlast berücksichtigt werden muss.

In besonderer Ausgestaltung der Erfindung ist wenigstens ein Teilbereich des schrägen Bereichs als Bestandteil eines Auswerfers oder eines Sortierers ausgebildet. Ein derartiger Auswerfer oder Sortierer kann hierbei als eigener Bandförderer oder auch als einfache Rutsche ausgebildet sein.

Hierdurch kann die Inspektionsvorrichtung beispielsweise fehlerhafte Produkte auswerfen oder unterschiedliche Inspektionsergebnisse sortieren, ohne dass in der Produktionslinie eine diesbezügliche Auswerf- oder Sortiereinrichtung vorgesehen werden muss. Beispielsweise ist es denkbar, einen Auswerfer oder Sortierer in Form eines in z-Richtung wirkenden Klappmechanismus (insbesondere ein Hoch- und/oder Herunterklappen eines Teilbereichs mit Schwenkachse in y-Richtung) auszubilden.

Ein derartiger Auswerfer oder Sortierer kann auch Bestandteil des Strahlungsschutzes sein. Beispielweise kann für einen Hell-Dunkel-Abgleich einer Kamera der Auswerfer oder Sorter in einer bestimmten Schwenkposition des Teilbereichs zusätzlich dazu betragen, ein Eindringen von Fremdlicht zu verhindern.

In weiterer Ausgestaltung der Erfindung umfasst die Wägevorrichtung wenigstens eine Wägezelle und wenigstens eine Wägeplattform, welche vorzugsweise als Blechbiegeteil ausgebildet ist. Hierbei ist es auch denkbar, dass je Plattform mehrere Wägezellen vorgesehen sind. Mehrere Wägeplattformen können sowohl benachbart in x-Richtung als auch benachbart in y-Richtung (Bandbreite) vorgesehen werden. Auf diese Art kann auch ein exaktes Wiegen von Produkten unterschiedlicher Größe auf mehreren Plattformen sowie ein Mehrspurenwiegen ermöglicht werden.

In besonders bevorzugter Ausgestaltung der Erfindung ist (Produkt-)stromaufwärts vor der Wägeplattform und fluchtend zu dieser eine Bandausrichteinheit ortsfest an der modular ausgebildeten Wägevorrichtung als integraler Bestandteil angeordnet.

Hierdurch kann selbst eine negative Auswirkung einer etwaigen Unregelmäßigkeit der Bandführung, die stromaufwärts vor dem Bereich der Wägevorrichtung ihre Ursache hat, ausgeschlossen werden.

In weiterer Ausgestaltung der Erfindung überwindet das Obertrum des Endlosbandes auf seinem Weg vom Eingangsbereich zum Bereich zur Inspektion mittels elektromagnetischer Strahlung, insbesondere zum Röntgen, einen Höhenunterschied in z-Richtung, wobei das Obertrum in diesem Bereich bevorzugt als Eingangsrampe ausgeführt ist. Auf diese Weise kann das Niveau des Eingangsbereichs und das Niveau des Ausgangsbereichs auf unterschiedliche Gegebenheiten angepasst werden.

In bevorzugter Ausgestaltung der Erfindung liegen der Eingangsbereich und Ausgangsbereich der Inspektionsvorrichtung bezüglich der z-Richtung im Wesentlichen auf gleicher Höhe, so dass die Inspektionsvorrichtung ohne Änderung des Niveaus in bestehenden auf gleichem Niveau arbeitenden Produktionslinien eingesetzt werden kann.

Nach der Erfindung befindet sich eine Vorrichtung zur Inspektion mittels elektromagnetischer Strahlung, insbesondere Röntgenvorrichtung, also eine Strahlungsquelle, insbesondere eine Röntgenquelle und ein Strahlungsdetektor, insbesondere ein Röntgendetektor, vorzugsweise eine Zeilenkamera, und eine Wägevorrichtung, also eine Wägezelle mit einem Lastaufnehmer, insbesondere Wägeplattform, innerhalb eines Strahlenschutzgehäuses und damit integriert in die Inspektionsvorrichtung.

Durch eine Vorrichtung zur Inspektion mittels elektromagnetischer Strahlung kann die Strahlung Produkte durchdringen oder von dem Produkt reflektiert werden.

Selbstverständlich ist es aber auch denkbar, weitere zusätzliche Inspektionseinheiten, wie beispielsweise Metalldetektoren, eine optische Inspektionsvorrichtung (zur Kontrolle des Aufdrucks bzw. der Kennzeichnung, eine Dichtigkeitsprüfvorrichtung) in eine solche Inspektionsvorrichtung zu integrieren.

Die Stromversorgung sowie die Signalübermittlung der Vorrichtung zur Inspektion mittels elektromagnetischer Strahlung, insbesondere Röntgenvorrichtung, und der Wägevorrichtung erfolgen in bekannter Weise. Selbstverständlich können sich entsprechende Auswerteeinheiten für das Röntgen und Wiegen der Produkte außerhalb des Strahlenschutzgehäuses befinden, wobei die Signalübermittlung zu diesen Auswerteeinheiten über Kabel (elektrisch, optisch) oder auch drahtlos erfolgen kann.

Weitere vorteilhafte Ausgestaltungen der Erfindung ergeben sich aus den abhängigen Ansprüchen.

Die Erfindung wird nachfolgend anhand von in der Zeichnung dargestellten Ausführungsbeispielen näher erläutert.

In der Zeichnung zeigen:
- Fig. 1: eine schematische Ansicht einer ersten Ausführungsform einer erfindungsgemäßen Inspektionsvorrichtung;
- Fig. 2: eine Detailansicht aus Fig. 1 und
- Fig. 3: eine schematische Ansicht einer zweiten Ausführungsform einer erfindungsgemäßen Inspektionsvorrichtung mit einem Auswerfer.

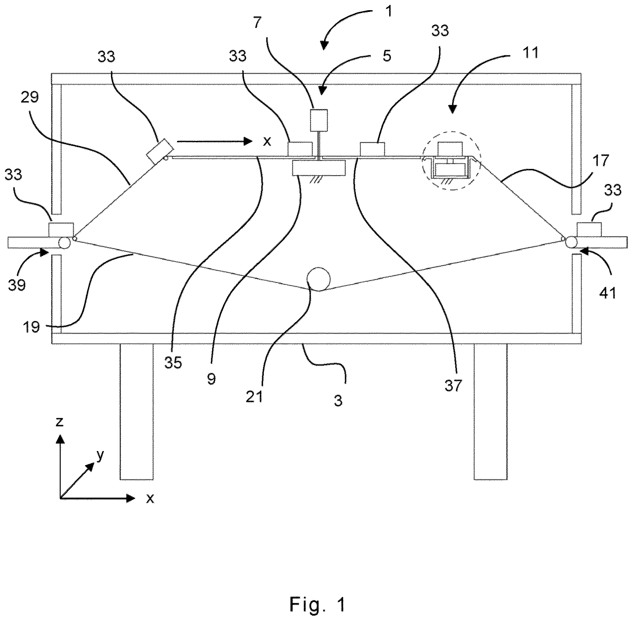

Die in Fig. 1 dargestellte Inspektionsvorrichtung 1 stellt eine schematische Seitenansicht mit - aus Gründen der leichteren Verständlichkeit - entfernter Vorderwand eines Strahlenschutzgehäuses 3 dar. Tatsächlich handelt es sich bei dem Strahlenschutzgehäuse 3 aber um ein geschlossenes mit Ausnahme von Öffnungen für einen Eingangsbereich 39 und einen Ausgangsbereich 41. Die Öffnungen in dem Strahlenschutzgehäuse 3 für den Eingangsbereich 39 und den Ausgangsbereich 41 werden abhängig von der Produkthöhe und -breite vorzugsweise möglichst klein gehalten, so dass ein optimaler Strahlenschutz bei gleichzeitigem Fördern der Produkte 33 ermöglicht wird.

Über den Eingangsbereich 39 werden in nicht näher dargestellter Weise Produkte 33 in die Inspektionsvorrichtung 1 gefördert, welche die Inspektionsvorrichtung 1 über den Ausgangsbereich 41 wieder verlassen.

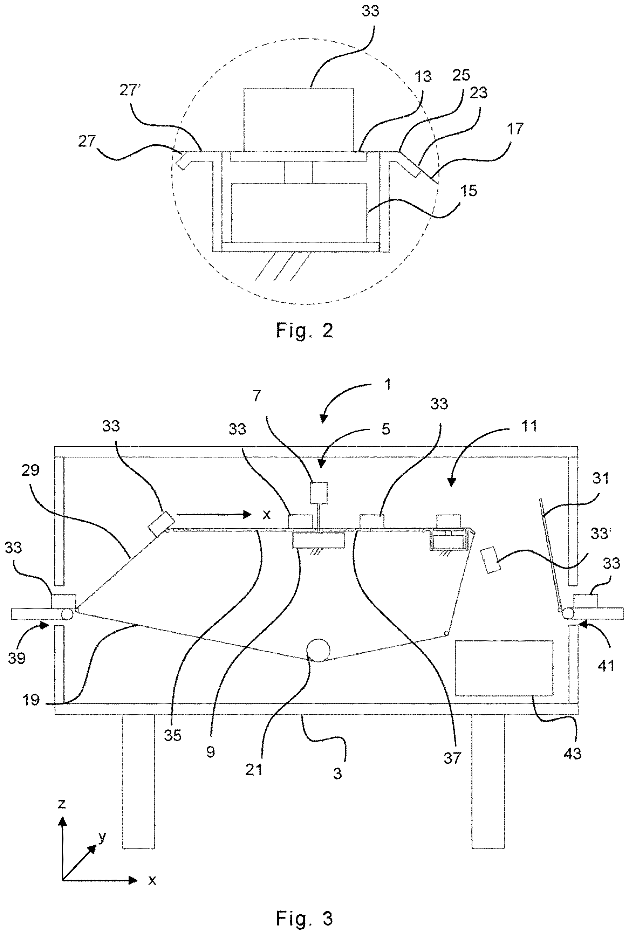

Eingangsbereich 39 und Ausgangsbereich 41 befinden sich, wie in Fig. 1 und Fig. 3 dargestellt, auf gleicher Höhe in z-Richtung. Am Eingangsbereich 39 wird ein Produkt 33 über eine schräg nach oben führende Eingangsrampe 29 mittels eines umlaufenden Endlosbandes 19 auf eine waagrechte Ebene gefördert.

In dieser waagrechten Ebene wird das Band und darauf befindliche Produkte in seiner Breite (y-Richtung erstreckend) bis vor und nach einer Röntgenvorrichtung mittels sich in y-Richtung und in x-Richtung erstreckenden Bandführungselemente 35, 37 unterstützt.

Die Röntgenvorrichtung 5 umfasst eine Röntgenquelle 7 oberhalb des Obertrums des Bandes 19 und unterhalb des Obertrums senkrecht unter der Röntgenquelle 7 einen Röntgendetektor 9, so dass auf dem Band 19 befindliche Produkte 33 durchleuchtet werden. Die Röntgenstrahlung durchdringt an dieser Stelle das Produkt 33 und das Band 19 geht durch einen Spalt zwischen Bandführungselement 35 und 37 und trifft auf den Röntgendetektor 9, der vorzugsweise als Zeilenkamera ausgebildet ist.

Selbstverständlich ist es auch möglich Röntgenquelle 7 und Röntgendetektor 9 in umgekehrter Anordnung vorzusehen.

Auf seinem Weg vom Eingangsbereich 39 zum Ausgangsbereich 41 durchläuft das Produkt 33 einen trapezförmigen Weg. Nach Durchlaufen der Röntgenvorrichtung wird das Produkt 33 von dem Führungselement 37 unterstützt zu einer Wägevorrichtung 11 gefördert, die vorzugsweise als Wägezelle 15 mit einer lastaufnehmenden Wägeplattform 13 ausgebildet ist.

Die Wägeplattform 13, beispielsweise ein Blechbiegeteil, liegt an der Bandunterseite an, so dass das Gewicht bzw. die Gewichtskraft des Produktes 33 an diesem Bereich des Obertrums des Bandes 19 von der Wägevorrichtung 11 erfasst wird.

Die Wägezelle 15 ist, wie aus Fig. 1 und Fig. 3 ersichtlich, zudem selbst am Festland angeordnet.

Die Stromversorgung sowie die Signalübermittlung von Röntgenvorrichtung 5 und Wägevorrichtung 11 erfolgen in bekannter und in der Zeichnung nicht dargestellter Weise. Selbstverständlich können sich entsprechende Auswerteeinheiten für das Röntgen und Wiegen der Produkte 33 außerhalb des Strahlenschutzgehäuses 3 befinden, wobei die Signalübermittlung zu diesen Auswerteeinheiten über Kabel (elektrisch, optisch) oder auch drahtlos erfolgen kann.

Nach dem Wiegen wird das Produkt 33 über einen schrägen Bereich 17 von der erhöhten waagrechten Seite des Trapezes wieder nach unten zum Ausgangsbereich 41 gefördert und verlässt über den Ausgangsbereich 41 die Inspektionsvorrichtung 1.

Das Zuführen and Abführen der Produkte zum Eingangsbereich 39 und vom Ausgangsbereich 41 ist in Fig. 1 und Fig. 3 beispielhaft für eine Produktionslinie schematisch mit entsprechenden Enden sich an Eingangsbereich 39 und Ausgangsbereich 41 anschließenden Bandförderern der Produktionslinie dargestellt. Selbstverständlich ist es aber auch denkbar, die Inspektionsvorrichtung für sich genommen als alleinstehende Vorrichtung zu betreiben, wobei Eingangsbereich 39 und Ausgangsbereich 41 auf andere Art und Weise bedient bzw. Produkte 33 angeliefert und entnommen werden.

Wie aus Fig. 1 ersichtlich, wird das im Obertrum trapezförmig ausgebildete Band 19 im Untertrum von einer Antriebsrolle 21, insbesondere einer Zugrolle oder Traktorrolle, angetrieben. Die Antriebsrolle 21 kann bezüglich des gesamten Bandweges, wie dargestellt, mittig oder an einem anderen Ort angeordnet sein. Vorzugsweise ist in Bandlaufrichtung die Bandstrecke von Wägevorrichtung 11 zur Antriebsrolle 21 (ausgangsseitig) kürzer als die Bandstrecke von Antriebsrolle 21 zur Wägevorrichtung 11 (Bandgeometrie).

Auf diese Weise wird das partiell betrachtete Ziehen eines Produkts 33 über die Wägeplattform 13 und den schrägen Bereich 17 zusätzlich unterstützt, so dass die Bandspannung über der Wägeplattform 13 und dem schrägen Bereich 17 gegenüber dem Bereich nach der Antriebsrolle 21 zusätzlich erhöht wird.

Durch das Ziehen der Antriebsrolle gegebenenfalls zusätzlich verstärkt durch vorstehend erläuterte Bandgeometrie liegt das über den schrägen Bereich nach unten gezogene Band 19 an der Umlenkstelle 25 (siehe Fig. 2) an, so dass ein Abheben des Bandes 19 oder gar Gurtflattern wie auch eine Wulstbildung vermieden wird.

Die Wägevorrichtung, insbesondere deren Wägeplattform 13 ist, wie aus Fig. 1, Fig. 2 sowie Fig. 3 ersichtlich, in Bandlaufrichtung in unmittelbarer Nähe des schrägen Bereichs 17 und damit dessen Umlenkstelle 25 angeordnet, so dass Lastaufnehmer der Wägevorrichtung, insbesondere die Wägeplattform 13 und Umlenkstelle 25, zueinander fluchten.

Das Auftreten der vorstehend erläuterten Probleme (Abheben des Bandes, Gurtflattern, Wulstbildung etc.) ist damit auch auf der Wägeplattform 13 ausgeschlossen, so dass diesbezüglich bedingte Fehlergebnisse beim Wiegen vermieden werden können.

Dadurch, dass der Lauf des Bandes 19 derart ausgebildet ist, dass das Band nicht nur im Bereich der Wägevorrichtung 11, sondern vorzugsweise auch im Bereich der Röntgenvorrichtung 5 gezogen wird, können vorteilhafterweise auch Wulstbildung, Dehnung etc. in Bandlaufrichtung in der Röntgenvorrichtung vermieden werden, die die Synchronität der aufgenommenen Bilder, insbesondere Zeilen pro Zeit und Längeneinheit, beim Röntgen unerwünscht beeinflussen. Auf diesem Wege können negative Einflüsse auf die Bildqualität verhindert werden.

Wie aus Fig. 2 ersichtlich, ist in Bandlaufrichtung gesehen ein Teil des schrägen Bereichs 17 als ein Abschnitt 23 vorzugsweise als abgekantetes Blech ausgebildet. Der Abschnitt 23, beinhaltet damit die Umlenkstelle 25, die selbstverständlich statt kantig auch abgerundet ausgebildet sein kann. Bandlaufseitig vor der Umlaufstelle 25 weist der Abschnitt 23 vorzugsweise einen waagrechten Bereich auf, der wie die Umlenkstelle 25 zur Wägeplattform 13 fluchtet.

Der Abschnitt 23 ist unmittelbar an einem festlandseitigen Bereich (in Fig. 2 an der Unterseite) der Wägezelle 15 fixiert und vorzugsweise in der als Modul einsetzbar und austauschbar ausgebildeten Wägevorrichtung 11 integriert. Die exakte Justierung des Abschnittes 23, damit die Umlenkstelle 25 (bzw. in y-Richtung erstreckenden Umlaufkante) und der gegebenenfalls anschließende waagrechte Bereich mit der Wägeplattform 13 fluchtet, kann hierbei werksseitig bei der Herstellung erfolgen, ohne dass eine derartige Feinjustierung beim Einsetzen des Moduls in die Inspektionsvorrichtung (Herstellung, Wartung, Reinigung, Austausch etc.) vorgenommen werden muss.

In Bandlaufrichtung vor der Wägeplattform 13 kann, wie in Fig. 2 dargestellt, eine Bandausrichteinheit 27 vorgesehen sein, die einen waagrechten Bereich 27` aufweist, der ebenfalls mit der Wägeplattform 13 fluchtet. Vor diesem waagrechten Bereich 27` kann ein schräger Bereich vorgelagert sein, der als eine das Band 19 aufwärts führende Rampe dient.

Die Bandausrichteinheit 27 kann ebenfalls wie der Abschnitt 23 unmittelbar an einem festlandseitigen Bereich (in Fig. 2 an der Unterseite) der Wägezelle 15 fixiert und vorzugsweise in der als Modul einsetzbar und austauschbar ausgebildeten Wägevorrichtung 11 integriert sein. Die exakte Justierung der Bandausrichteinheit 27, damit deren waagrechter Bereich 27` mit der Wägeplattform 13 fluchtet, kann hierbei werksseitig bei der Herstellung erfolgen, ohne dass eine derartige Feinjustierung beim Einsetzen des Moduls in die Inspektionsvorrichtung (Herstellung, Wartung, Reinigung, Austausch etc.) vorgenommen werden muss.

Die in Fig. 3 dargestellte zweite Ausführungsform ist bis auf nachfolgend erläuterte Unterschiede mit der ersten Ausführungsform nach Fig. 1 identisch, so dass die getroffenen Aussagen auch hierfür zutreffen.

Im Unterschied zur ersten Ausführungsform weist die zweite Ausführungsform einen Auswerfer 31 (oder Sortierer) auf. Der schräge Bereich 17 (aus Fig. 1) endet in diesem Fall mit dem Abschnitt 23. Dessen Fortsetzung in Richtung Ausgangsbereich 41 ist hierzu teilweise als schwenkbarer Bereich, beispielsweise in Form einer Platte, ausgebildet, der eine im Bereich des Ausgangs 41 senkrecht zur Zeichenebene (y-Achse) liegende Schwenkachse aufweist.

Im Falle eines negativen Inspektionsergebnisses (beim Röntgen und/oder Wiegen) kann der Bereich 31, wie in Fig. 3 dargestellt, nach oben geschwenkt werden, so dass ein für fehlerhaft befundenes Produkt (33`) in einen darunter befindlichen Auffangbehälter 43 fällt.

Dagegen werden Produkte 33, die die Inspektion bestehen, über den Bereich 31 in geschlossener bzw. nicht nach oben geschwenkter Position, in dem der Bereich 31 fluchtend an den Abschnitt 23 anschließt (wobei sich ein Fugenspalt oder einer Lücke dazwischen befindet kann), zum Ausgangsbereich gefördert.

Der Bereich 31 kann hierbei als eigener Bandförderer oder auch als einfache Rutsche ausgebildet sein. In diesem in Fig. 3 dargestellten Fall wird der Bereich 31 nicht von dem Band 19 umlaufen, so dass der Lauf des Bandes 19 nicht von dem Auswerfer 31 beeinflusst wird.

Auch wenn in den beiden Ausführungsformen eine Röntgenvorrichtung als Form einer Vorrichtung zur Inspektion mittels elektromagnetischer Strahlung erläutert wurde, sind diese Ausführungsformen ohne Weiteres auch für andere Vorrichtungen zur Inspektion mittels elektromagnetischer Strahlung (auch mit sichtbarem Licht, Infrarot, UV, Terahertz etc.) anwendbar. Im Falle einer Reflexion ist es selbstverständlich nicht erforderlich, dass Strahlungsquelle und Detektor auf gegenüberliegenden Seiten eines Produkts (wie dargestellt ober- und unterhalb oder auch seitlich) angeordnet sind, sondern beispielsweise auf der gleichen Seite des Produkts angeordnet sind.

### Bezugszeichenliste

- 1: Inspektionsvorrichtung
- 3: Strahlenschutzgehäuse
- 5: Röntgenvorrichtung
- 7: Röntgenquelle
- 9: Röntgendetektor
- 11: Wägevorrichtung
- 13: Wägeplattform (bzw. Lastaufnehmer in Form einer Wägeplattform)
- 15: Wägezelle
- 17: schräger Bereich
- 19: Endlosband
- 21: Antriebsrolle Zugrolle/Traktorrolle
- 23: Abschnitt des schrägen Bereichs
- 25: Umlenkstelle des schrägen Bereichs
- 27: Bandausrichteinheit
- 27`: waagrechter Bereich der Bandausrichteinheit
- 29: Eingangsrampe
- 31: Auswerfer/Sortierer
- 33: Produkte
- 33': fehlerhaftes Produkt
- 35: Bandführungselement
- 37: Bandführungselement
- 39: Eingangsbereich
- 41: Ausgangsbereich
- 43: Auffangbehälter

- x: Förderrichtung
- y: Richtung senkrecht zu Zeichenebene (Breitenrichtung)
- z: Höhenrichtung

## Patentansprüche

1. Inspektionsvorrichtung, die in einem vorzugsweise vorhanglosen Strahlenschutzgehäuse (3) eine Vorrichtung zur Inspektion mittels elektromagnetischer Strahlung, insbesondere eine Röntgenvorrichtung (5), und eine Wägevorrichtung (11) beinhaltet,
a) wobei die Inspektionsvorrichtung (1) sich in ihrer Höhe in z-Richtung, in ihrer Länge in x-Richtung und in ihrer Breite in y-Richtung erstreckt,
b) mit einem für die Vorrichtung zur Inspektion mittels elektromagnetischer Strahlung (5) und die Wägevorrichtung (11) gemeinsamen Endlosförderband (19), um Produkte (33) in Förderrichtung (x-Richtung) von einem Eingangsbereich (39) der Inspektionsvorrichtung (1) zu einem Bereich zur Inspektion mittels elektromagnetischer Strahlung, von dort zu einem Bereich zum Wiegen und von dort zu einem Ausgangsbereich (41) der Inspektionsvorrichtung (1) zu fördern,
c) wobei das Obertrum des Endlosförderbandes (19) auf seinem Weg vom Bereich zum Wiegen zum Ausgangsbereich (41) einen Höhenunterschied entgegen der z-Richtung mittels eines schrägen Bereichs (17) überwindet,
d) wobei wenigstens ein Teilbereich des schrägen Bereichs oder mehrere Teilbereiche oder der gesamte schräge Bereich (17) von dem gemeinsamen Endlosförderband (19) umlaufen wird,
e) wobei die Wägevorrichtung (11) in der Inspektionsvorrichtung (1), in Förderrichtung (x-Richtung) gesehen, unmittelbar vor dem schrägen Bereich (17) angeordnet ist.

2. Vorrichtung nach Anspruch 1, **dadurch gekennzeichnet, dass** sich ein Teilbereich oder mehrere Teilbereiche oder der gesamte schräge Bereich (17) innerhalb des Strahlenschutzgehäuses (3) befindet.

3. Vorrichtung nach Anspruch 1 oder 2, **dadurch gekennzeichnet, dass** die Wägevorrichtung (11) als Modul ausgebildet ist, um in die Inspektionsvorrichtung (1) eingesetzt und aus dieser entnommen werden zu können, wobei wenigstens ein Teilbereich als Abschnitt (23) des schrägen Bereichs (17) als integraler Bestandteil ortsfest an der modular ausgebildeten Wägevorrichtung (11) angeordnet ist.

4. Vorrichtung nach Anspruch 3, **dadurch gekennzeichnet, dass** der Abschnitt (23) des schrägen Bereichs (17) derart an der Wägevorrichtung (11) angeordnet ist, dass sein Gewicht beim Wiegen eines zuvor mittels elektromagnetischer Strahlung inspizierten Produkts (33) nicht berücksichtigt wird.

5. Vorrichtung nach einem der vorhergehenden Ansprüche, **dadurch gekennzeichnet, dass** wenigstens ein Teilbereich des schrägen Bereichs (17) als Bestandteil eines Auswerfers (31) oder eines Sortierers ausgebildet ist.

6. Vorrichtung nach einem der vorhergehenden Ansprüche, **dadurch gekennzeichnet, dass** die Wägevorrichtung (11) wenigstens eine Wägezelle (15) und wenigstens eine Wägeplattform (13) umfasst.

7. Vorrichtung nach Anspruch 6, **dadurch gekennzeichnet, dass** stromaufwärts vor der Wägeplattform (11) und fluchtend zu dieser eine Bandausrichteinheit (27) als integraler Bestandteil ortsfest an der modular ausgebildeten Wägevorrichtung (11) angeordnet ist.

8. Vorrichtung nach einem der vorhergehenden Ansprüche, **dadurch gekennzeichnet, dass** das Obertrum auf seinem Weg vom Eingangsbereich (39) zum Bereich zur Inspektion mittels elektromagnetischer Strahlung einen Höhenunterschied in z-Richtung überwindet und bevorzugt als Eingangsrampe (29) ausgeführt ist.

9. Vorrichtung nach einem der vorhergehenden Ansprüche, **dadurch gekennzeichnet, dass** Eingangsbereich (39) und Ausgangsbereich (41) der Inspektionsvorrichtung (1) bezüglich der z-Richtung im Wesentlichen auf gleicher Höhe liegen.

## Claims

1. Inspection device which contains, in a preferably curtainless radiation protection housing (3), a device for inspection by means of electromagnetic radiation, in particular an X-ray device (5), and a weighing device (11),
a) wherein the inspection device (1) extends in its height in the z-direction, in its length in the x-direction and in its width in the y-direction,
b) having an endless conveyor belt (19) common to the device for inspection by means of electromagnetic radiation (5) and the weighing device (11), in order to convey products (33) in the conveying direction (x-direction) from an input region (39) of the inspection device (1) to a region for inspection by means of electromagnetic radiation, from there to a region for weighing and from there to an output region (41) of the inspection device (1),
c) wherein the upper side of the endless conveyor belt (19) overcomes a height difference against the z-direction on its way from the weighing region to the output region (41) by means of an inclined region (17),
d) wherein at least a partial region of the inclined region or several partial regions or the entire inclined region (17) is circulated by the common endless conveyor belt (19),
e) wherein the weighing device (11) is arranged in the inspection device (1) immediately in front of the inclined region (17), viewed in the conveying direction (x-direction).

2. Device according to claim 1, **characterized in that** a partial region or several partial regions or the entire inclined region (17) is located within the radiation protection housing (3).

3. Device according to either claim 1 or claim 2, **characterized in that** the weighing device (11) is designed as a module in order to be able to be inserted into the inspection device (1) and removed therefrom, at least a partial region as a portion (23) of the inclined region (17) being arranged as an integral component in a fixed position on the modularly designed weighing device (11).

4. Device according to claim 3, **characterized in that** the portion (23) of the inclined region (17) is arranged on the weighing device (11) in such a way that its weight is not taken into account when weighing a product (33) previously inspected by means of electromagnetic radiation.

5. Device according to any of the preceding claims, **characterized in that** at least a partial region of the inclined region (17) is designed as a component of an ejector (31) or a sorter.

6. Device according to any of the preceding claims, **characterized in that** the weighing device (11) comprises at least one weighing cell (15) and at least one weighing platform (13).

7. Device according to claim 6, **characterized in that** upstream of the weighing platform (11), and in alignment with it, a belt alignment unit (27) is arranged as an integral component in a fixed position on the modular weighing device (11).

8. Device according to any of the preceding claims, **characterized in that** the upper side overcomes a height difference in the z-direction on its way from the input region (39) to the region for inspection by means of electromagnetic radiation and is preferably designed as an input ramp (29).

9. Device according to any of the preceding claims, **characterized in that** the input region (39) and output region (41) of the inspection device (1) are substantially at the same height with respect to the z-direction.

## Revendications

1. Dispositif d'inspection qui contient, dans un boîtier de radioprotection (3) de préférence sans rideau, un dispositif pour l'inspection à l'aide d'un rayonnement électromagnétique, en particulier un dispositif de radiographie (5), et un dispositif de pesage (11),
a) dans lequel le dispositif d'inspection (1) s'étend dans sa hauteur dans la direction z, dans sa longueur dans la direction x et dans sa largeur dans la direction y,
b) avec une bande transporteuse sans fin (19) commune au dispositif pour l'inspection à l'aide de rayonnement électromagnétique (5) et au dispositif de pesage (11), pour transporter des produits (33) dans la direction de transport (direction x) d'une zone d'entrée (39) du dispositif d'inspection (1) à une zone pour l'inspection à l'aide de rayonnement électromagnétique, de là à une zone pour le pesage et de là à une zone de sortie (41) du dispositif d'inspection (1),
c) dans lequel le brin supérieur de la bande transporteuse sans fin (19) surmonte une différence de hauteur dans la direction opposée à la direction z à l'aide d'une zone inclinée (17) sur son trajet depuis la zone pour le pesage jusqu'à la zone de sortie (41),
d) dans lequel au moins une zone partielle de la zone inclinée ou plusieurs zones partielles ou la totalité de la zone inclinée (17) est parcourue par la bande transporteuse sans fin (19) commune,
e) dans lequel le dispositif de pesage (11) est disposé dans le dispositif d'inspection (1), vu dans la direction de transport (direction x), immédiatement avant la zone inclinée (17).

2. Dispositif selon la revendication 1, **caractérisé en ce qu'**une zone partielle ou plusieurs zones partielles ou la totalité de la zone inclinée (17) se trouve à l'intérieur du boîtier de radioprotection (3).

3. Dispositif selon la revendication 1 ou 2, **caractérisé en ce que** le dispositif de pesage (11) est réalisé sous forme de module, afin de pouvoir être inséré dans le dispositif d'inspection (1) et retiré de celui-ci, dans lequel au moins une zone partielle en tant que section (23) de la zone inclinée (17) est disposée de manière fixe sur le dispositif de pesage (11) de conception modulaire, en tant que partie intégrante.

4. Dispositif selon la revendication 3, **caractérisé en ce que** la section (23) de la zone inclinée (17) est disposée sur le dispositif de pesage (11) de telle sorte que son poids n'est pas pris en compte lors du pesage d'un produit (33) préalablement inspecté à l'aide d'un rayonnement électromagnétique.

5. Dispositif selon l'une des revendications précédentes,
**caractérisé en ce qu'**au moins une zone partielle de la zone inclinée (17) est réalisée comme partie intégrante d'un éjecteur (31) ou d'un trieur.

6. Dispositif selon l'une des revendications précédentes,
**caractérisé en ce que** le dispositif de pesage (11) comprend au moins une cellule de pesage (15) et au moins une plate-forme de pesage (13).

7. Dispositif selon la revendication 6, **caractérisé en ce qu'**en amont de la plate-forme de pesage (11) et en alignement avec celle-ci, une unité d'alignement de bande (27) est disposée en tant que partie intégrante fixe sur le dispositif de pesage (11) de conception modulaire.

8. Dispositif selon l'une des revendications précédentes,
**caractérisé en ce que** le brin supérieur surmonte une différence de hauteur dans la direction z sur son trajet depuis la zone d'entrée (39) jusqu'à la zone pour l'inspection à l'aide d'un rayonnement électromagnétique et est réalisé de préférence sous forme de rampe d'entrée (29).

9. Dispositif selon l'une des revendications précédentes, **caractérisé en ce que** la zone d'entrée (39) et la zone de sortie (41) du dispositif d'inspection (1) sont situées sensiblement à la même hauteur par rapport à la direction z.
